# EUROPEAN PATENT APPLICATION

(11) **EP 4 464 490 A1**
(43) Date of publication of application: **20.11.2024**
(21) Application number: 23173501.0
(22) Date of filing: 15.05.2023
(51) Int. Cl.: B29C 35/08, B29C 71/04, B29C 64/30, B33Y 40/20

(54) **CHAMBER FOR CURING A WORKPIECE**

(71) Applicant: Dymax Engineering Adhesives Ireland Ltd., Dublin D09 V82H (IE)
(72) Inventor: Kaschel, Frederico Rossi, Dublin, D09 V28H (IE); Tangdiongga, Geri, Dublin, D09 V28H (IE); Mehta, Naynesh, Dublin, D09 V82H (IE); Stephan, Dominik, Dublin, D09 V82H (IE)
(74) Representative: FRKelly

(57) **Abstract**

A curing chamber (10) for curing a workpiece by exposure to electromagnetic radiation, comprises at least three sidewalls (12, 14, 16, 18, 72) surrounding and at least partially defining an interior volume adapted to contain a workpiece. The sidewalls are reflective to electromagnetic radiation of a predetermined wavelength and each sidewall has a pair of opposed edges (121, 122, 141, 142, 161, 162, 181, 182), so that the edges of one sidewall are each located adjacent one of the opposed edges of an adjacent sidewall. The region between adjacent edges of adjacent sidewalls defines a respective elongated corner region (20, 74) in which there is located a radiation-emitting device (22). The radiation-emitting device, which may be an array of LEDs or other sources of suitable radiation to cure the workpiece, is of an elongate shape and is disposed along a corner region to emit electromagnetic radiation of said predetermined wavelength from a plurality of points along the length of the device into said interior volume when activated. The resulting distribution in radiation intensity within the chamber promotes more even and efficient curing of a workpiece.

## Description

### Technical Field

This invention relates to chambers for curing workpieces, and to apparatuses incorporating such chambers. More particularly it relates to chambers for curing workpieces by exposure to electromagnetic radiation.

### Background Art

In additive manufacturing technology, such as 3D printing, an item is made by building up layers of a substance which is flowable, malleable or melted, and which subsequently needs to be hardened. A popular choice is to use a photosensitive polymer which can be hardened by curing with electromagnetic radiation. The radiation is often ultraviolet but may be visible, infrared, or of some other wavelength. In order to cure the workpiece, it is important to expose it as fully as possible to the curing radiation.

This is frequently accomplished using a curing chamber into the interior of which the workpiece is placed, with the interior then being illuminated by the radiation. There is a need for improved chamber geometries and structures that can provide more efficient and effective curing of workpieces.

### Disclosure of the Invention

In a first aspect there is provided a curing chamber for curing a workpiece by exposure to electromagnetic radiation, comprising:
at least three sidewalls surrounding and at least partially defining an interior volume adapted to contain a workpiece, each of the sidewalls being reflective to electromagnetic radiation of a predetermined wavelength within said interior volume,
wherein each sidewall has a pair of opposed edges each of which is located adjacent one of the opposed edges of an adjacent one of the sidewalls, with the region between adjacent edges of adjacent sidewalls defining a respective elongated corner region; and
at least one radiation-emitting device, the radiation-emitting device being of an elongate shape and being disposed along one of said corner regions such as to emit electromagnetic radiation of said predetermined wavelength from a plurality of points along the length of the device into said interior volume when activated.

The curing chamber of the invention provides a geometry in which radiation sources, in particular elongated sources such as arrays of emitters, are located in corner regions between reflective sidewalls. This provides for a more uniform illumination of the chamber volume, permitting workpieces to be cured more evenly and efficiently.

Preferably, the chamber comprises a plurality of said radiation-emitting devices, each of which is disposed along a different respective corner region.

In currently preferred embodiments, one of said radiation-emitting devices is provided in each of said corner regions.

Preferably, a corner region between adjacent ones of said three or more sidewalls is occupied by a corner wall, disposed at a facing angle intermediate the angle faced by the adjacent pair of sidewalls, wherein the radiation-emitting device is provided within said corner wall.

The use of angled corner walls, within which the radiation emitting device is located, provides illumination that reflects off the sidewalls and around the chamber volume due to the angle at which the emitted radiation reaches the sidewalls.

Preferably, the corner wall is a reflective panel having said radiation-emitting device disposed within the surface thereof.

This adds to the reflectivity of the chamber's interior surface, increasing efficiency further.

Preferably, the or each radiation-emitting device has a facing surface from which said radiation is emitted, the facing surface being disposed between the adjacent sidewalls to face in a direction intermediate the directions normal to the respective immediately adjacent sidewall surfaces.

Thus the facing surface may be within a corner wall, or it may be provided in a corner angle between two sidewalls, without the need for any corner wall.

Optionally, the direction faced by the facing surface may substantially bisect the angle between the immediately adjacent sidewall surfaces.

In preferred embodiments, the or each radiation-emitting device is disposed within a reflective corner wall.

Preferably, the or each radiation-emitting device comprises an elongate array of radiation emitters.

Further, preferably, said emitters are light-emitting diodes (LEDs).

Said LEDs may be disposed in a linear array along said corner region.

More preferably, said LEDs are disposed in an array fitting within a rectangular area which extends along said elongated corner region.

Preferably, each sidewall is generally rectangular in area and has a width defined between the opposed edges and a depth defined parallel to the opposed edges, and wherein the or each radiation-emitting device extends along more than 50% of the depth of an adjacent sidewall.

It will be appreciated that rectangular sidewalls are preferred as they can be incorporated in simple geometries, but the skilled person may choose any sidewall shaped that is desired.

Preferably, the or each radiation-emitting device extends along more than 75% of the depth of an adjacent sidewall.

A "radiation-emitting device" encompasses a number of such devices arranged in an elongate formation.

In certain embodiments, three sidewalls are provided.

In such cases, a respective radiation-emitting device may be disposed along each of the three corner areas between adjacent pairs of the three sidewalls.

Preferably, in such a case, the sidewalls and radiation-emitting devices together define a six-sided cross-sectional boundary surrounding said interior volume, the shape of the cross-section being an irregular or regular hexagon having alternating sides defined by sidewalls and radiation-emitting devices, respectively.

Preferably, three corner walls are provided, each corner wall being disposed in a corner region between a respective pair of the sidewalls, wherein a respective radiation-emitting device is disposed in each corner wall.

Preferably, the sidewalls and corner walls together define a six-sided cross-sectional boundary surrounding said interior volume, the shape of the cross-section being an irregular or regular hexagon having alternating sides defined by sidewalls and corner walls, respectively.

In other embodiments, four sidewalls are provided.

Preferably, the four sidewalls comprise a pair of opposed, parallel top and bottom sidewalls and a pair of opposed, parallel left and right sidewalls.

Preferably, the areas of the top and bottom sidewalls are equal to one another, and wherein the areas of the left and right sidewalls are equal to one another.

Preferably, the areas of the top and bottom sidewalls are different to the areas of the left and right sidewalls.

In certain embodiments, a respective radiation-emitting device is disposed along each of the four corner areas between adjacent pairs of the four sidewalls.

Preferably, the sidewalls and radiation-emitting devices together define an eight-sided cross-sectional boundary surrounding said interior volume, the shape of the cross-section being an irregular or regular octagon having alternating sides defined by the sidewalls and radiation-emitting devices, respectively.

Preferably, four corner walls are provided, each corner wall being disposed in a corner region between a respective pair of the sidewalls, wherein a respective radiation-emitting device is disposed in each corner wall.

Preferably, the sidewalls and corner walls together define an eight-sided cross-sectional boundary surrounding said interior volume, the shape of the cross-section being an irregular or regular octagon having alternating sides defined by the sidewalls and corner walls, respectively.

More generally, we disclose herein devices where four or more sidewalls are provided, with radiation-emitting devices disposed in at least two corner areas between adjacent sidewalls.

Thus, the disclosure is not limited by the illustrated embodiments to three-sidewall or four-sidewall embodiments. The skilled person may apply the teachings herein to more complex chamber geometries is with three, four, five, or any larger number of sidewalls, where the corner areas between at least some adjacent sidewalls are provided with elongated radiation-emitting devices.

Preferably, each of the at least two corner areas between adjacent sidewalls in which the radiation-emitting devices are disposed, is provided as a corner wall angled at a direction intermediate the immediately adjacent sidewalls.

Preferably, the radiation-emitting device comprises a window that is transparent to said electromagnetic radiation of a predetermined wavelength, the window forming at least part of a boundary surface of the chamber interior volume, and one or more radiation emitters disposed to illuminate the interior volume through the window.

In this way, the radiation emitting device can be located outside the window and therefore separated physically from the chamber interior. Since the chamber interior will typically undergo increases in temperatures as parts are cured, this separation protects the electronics of the radiation-emitting devices and prolongs their lifespan, allowing them to operate at high intensities for longer periods, and thereby giving shorter cure times.

Preferably, said one or more radiation emitters are provided in a panel of emitters disposed outwardly of the window and facing towards the window.

Preferably, the panel of emitters comprises a front surface on which the emitters are mounted and facing towards the window and a rear surface facing away from the window.

Preferably, the chamber comprises a cooling mechanism disposed outwardly of the panel of emitters and adapted to cool the panel of emitters from the rear surface thereof.

Preferably, the chamber further comprises a rear wall adjacent each of the sidewalls at a rear sidewall edge, the rear wall further defining and bounding said interior volume.

Preferably, the rear wall is reflective to said wavelength of electromagnetic radiation.

Preferably, the curing chamber further comprises a front wall adjacent each of the sidewalls at a front sidewall edge, the front wall further defining and bounding said interior volume.

Preferably, the front wall is reflective to said wavelength of electromagnetic radiation.

Preferably, an opening is provided in a wall enclosing the interior volume to permit the insertion and removal of a workpiece into the interior volume.

Preferably, said opening comprises a door which can be opened to permit access to the interior volume and closed to enclose the interior volume.

In some cases, said door is provided within a wall.

In other cases, one of the walls is openable as a door.

Preferably, the chamber comprises a front wall adjacent each of the sidewalls at a front sidewall edge, said front wall further defining and bounding said interior volume, and said opening being provided at said front wall.

Preferably, said front wall is a door which opens to provide said opening.

In another aspect, there is provided an apparatus for curing a workpiece by exposure to electromagnetic radiation, comprising:
a curing chamber according to any of the statements of invention above;
a controller configured to control the activation and operation of the or each radiation-emitting device in accordance with a user input; and
a power source providing power to the or each radiation-emitting device under the control of the controller.

### Brief Description of the Drawings

The invention will now be further illustrated by the following description of embodiments thereof, given by way of example only, with reference to the accompanying drawings, in which:
- Fig.1: is a perspective view of a curing chamber for curing a workpiece;
- Fig.2: is a front elevation of the curing chamber of Fig.1;
- Fig.3: is a cutaway perspective view of the curing chamber of Fig.1, cut through a vertical plane halfway along the length of the chamber;
- Fig.4: is a cutaway a perspective view of the curing chamber of Fig.1, cut through a horizontal plane halfway up the height of the chamber;
- Fig.5: is a plan view of the cutaway curing chamber from Fig.4 taken from above;
- Fig.6: a is a plan view from above of the chamber of Fig.1;
- Fig.7: is a side elevation of the chamber of Fig.1;
- Fig.8: is a perspective view of the curing chamber of Fig.1, further including front and rear walls;
- Fig.9: is a perspective view of the chamber of Fig.8, cutaway along a horizontal plane halfway up the height of the chamber;
- Fig.10: is a perspective view of an apparatus for curing a workpiece, incorporating the curing chamber of Fig.1;
- Fig.11: is a perspective view of a second embodiment of curing chamber;
- Fig.12: is a front elevation of the curing chamber of Fig.11;
- Fig.13: is a side elevation of the curing chamber of Fig.12;
- Fig.14: is a top plan view of the curing chamber of Fig.12;
- Fig.15: is a spatial plot of intensity distribution (mW/cm2) at maximum power setting across the chamber, facing up;
- Fig.16: is a spatial plot of intensity distribution (mW/cm2) at maximum power setting across the chamber, facing down;
- Fig.17: is a spatial plot of intensity distribution (mW/cm2) at a medium power setting across the chamber, facing up;
- Fig.18: is a spatial plot of intensity distribution (mW/cm2) at a medium power setting across the chamber, facing down;
- Fig. 19: is a spatial plot of mechanical properties recorded for tensile specimens cured at different points across the chamber using 300 mW/cm² intensity illumination;
- Fig. 20: is a spatial plot of mechanical properties recorded for tensile specimens cured at different points across the chamber using 600 mW/cm² intensity illumination;
- Fig. 21: is a plan view of the facing surface of a radiation-emitting device;
- Fig. 22: is a plot of simulated irradiance at 365 nm against position along X and Y axes on a first plane of a simulated curing chamber;
- Fig. 23: is a plot of simulated irradiance at 385 nm against position along X and Y axes;
- Fig. 24: is a plot of simulated irradiance at 405 nm against position along X and Y axes;
- Fig. 25: is a plot of simulated irradiance at all wavelengths against position along X and Y axes;
- Fig. 26: is a plot of simulated irradiance at all wavelengths against position along X and Y axes at a second plane;
- Fig. 27: is a plot of simulated irradiance at all wavelengths against position along X and Y axes at a third plane; and
- Fig. 28: is a plot of simulated irradiance at all wavelengths against position along X and Y axes at a fourth plane.

### Detailed Description of Preferred Embodiments

In Fig.one there is indicated, generally at 10, a curing chamber according to the invention. The curing chamber 10 has four sidewalls, namely a top sidewall 12, a bottom sidewall 14, by left sidewall 16, and a right sidewall 18. The four sidewalls surround and partially defining an interior volume which is adapted to contain a workpiece, such as a 3D-printed workpiece which requires curing by exposure to electromagnetic radiation.

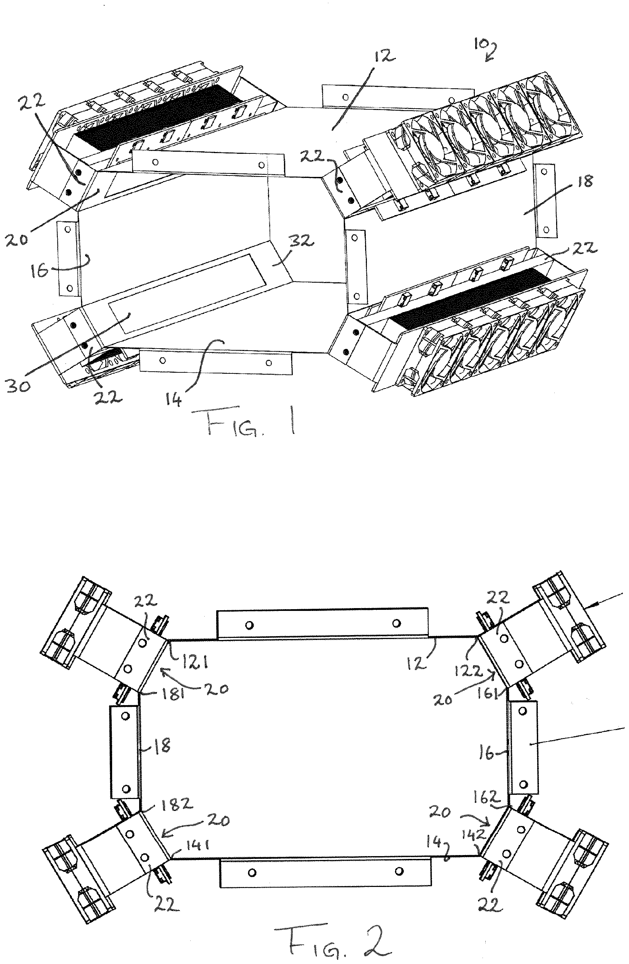

Each sidewall has a pair of opposed edges located adjacent an opposed edge of an adjacent one of the sidewalls. Thus, referring to Fig.2, top sidewall 12 has a left edge 121 and a right edge 122; bottom sidewall 14 has a left edge 141 and a right edge 142; right sidewall 16 has a top page 161 and a bottom edge 162; and left sidewall 18 has a top page 181 and a bottom edge 182.

It can be seen that the left edge 121 of top sidewall 12 is adjacent the top edge 181 of left sidewall 18; the right edge 122 of top sidewall 12 is adjacent the top edge 161 of right sidewall 16; the left edge 141 of bottom sidewall 14 is adjacent the bottom edge 182 all of the left sidewall 18; and the right edge 142 of bottom sidewall 14 is adjacent the bottom edge 162 of right sidewall 16.

The region between each pair of adjacent sidewall edges is an elongated corner region 20, and in each of the four corner regions 20, a respective radiation-emitting device 22.

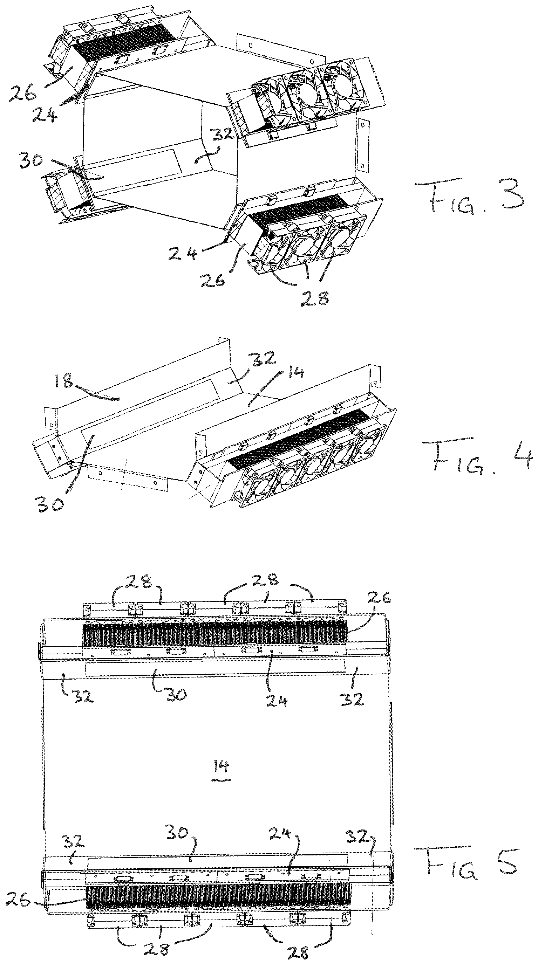

Referring additionally to Figs. 3-5, it can be seen that each radiation-emitting device 22 comprises a light engine 24 in the form of a printed circuit board having an array of LEDs and associated driving circuitry, with a heat sink 26 mounted on the rear of the light engine 24, and an array of cooling fans 28 mounted on the rear of the heat engine 26. The array of LEDs is provided on a facing surface of the circuit boards to emit electromagnetic radiation through a protective glass window 30 into the chamber interior volume.

The LEDs can be substituted with any suitable narrowband or broadband source of radiation, which emits along an elongated area. In the illustrated embodiment, the LEDs are provided as independently controllable multiwavelength UV sources (emitting at 365, 385 and 405 nm), but the choice of wavelength and intensity, and the choice of emitter type, are at the choice of the system designer, taking into account the desired curing regime needed for a given category of workpiece to be cured. Each light engine has an array made up of six individual sub-arrays of LEDs (two sub-arrays of each of the wavelengths with each sub-array having 14 LEDs, for a total of 84 LEDs per light engine).

Where there are individual emitters in the radiation-emitting device, and where different emitters have different emission profiles (for example, but not limited to, LEDs with different peak emission wavelengths), the distribution of the emitters along the length of an array is preferably chosen to ensure that when all are activated, the illumination is as uniform as possible across the chamber's enclosed volume at all wavelengths. Therefore the layout of individual emitters on a PCB, or the layout of multiple PCBs in an overall array, can be designed with this requirement in mind.

An optional feature, not shown in this embodiment, is to provide a reflector plate on the fron of the PCB, with individual LEDs being located in a respective aperture in the reflector plate. The apertures may each be located at the base of a respective convex dimple or dish formation in the plate so that each LED protrudes through and is surrounded by a reflective convex surface to direct the radiation preferentially in a certain direction. Such a reflective plate can also promote reflection of incident radiation that comes through the window and strikes the reflective plate, reflecting it back into the chamber.

The protective glass window 30 is disposed within a respective corner wall 32, which faces into the chamber at an angle intermediate the facing angles of the immediately adjacent sidewalls.

Thus, in cross section, as best seen in Figs. 2 and 3, the chamber has an irregular octagonal cross section defined by the four sidewalls and the four corner walls. The material of the sidewalls and all of the corner walls is reflective to the radiation emitted by the LEDs. This may be achieved most conveniently by forming the sidewalls from a reflective material, but an alternative is to coat the walls with a reflective coating. In the illustrated embodiment, the walls are formed from sheets of anodised aluminium which are coated on the interior surface with a physical vapour deposition layer of high-purity aluminium to provide a highly reflective surface with low diffuse reflection, the material being sold by Alanod-Westlake Metal Ind. of North Ridgeville, Ohio under the trade mark Miro 4.

Although not visible in the figures, each array of LEDs occupies a rectangular area substantially matching the area of the glass window 30. When activated, the LEDs emit radiation into the interior volume which is reflected from the sidewalls and corner walls to uniformly illuminate the chamber interior volume.

By locating the LEDs outside the protective window 30, they are at least partly thermally isolated from the temperature in the chamber interior volume. By adding a heat sink 26 and cooling fans 28, in combination with the location of the LEDs outside the chamber, the LEDs can operate at high intensity for extended periods with a good lifetime.

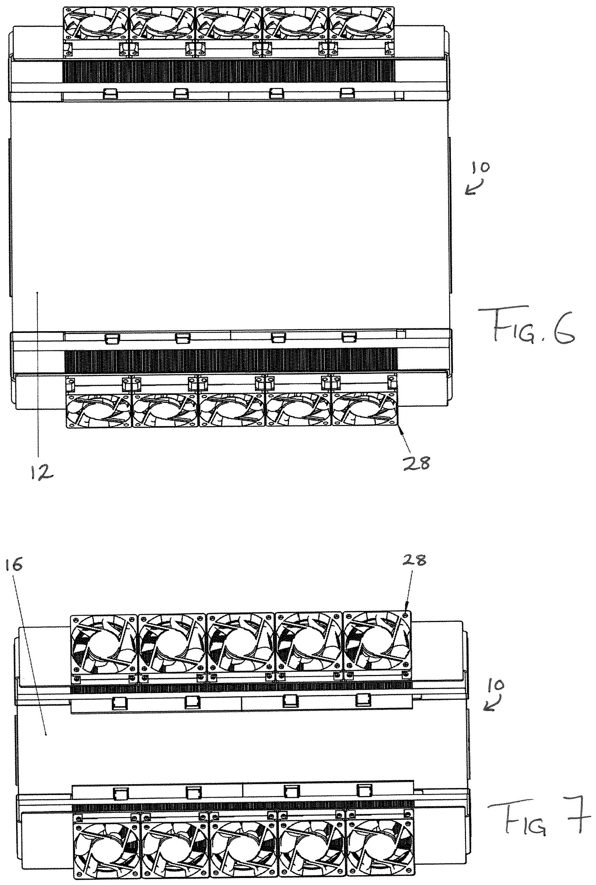

Figs. 6 and 7 show the exterior of the curing chamber 10 in a top plan view (Fig.6) and a side elevation (Fig.7).

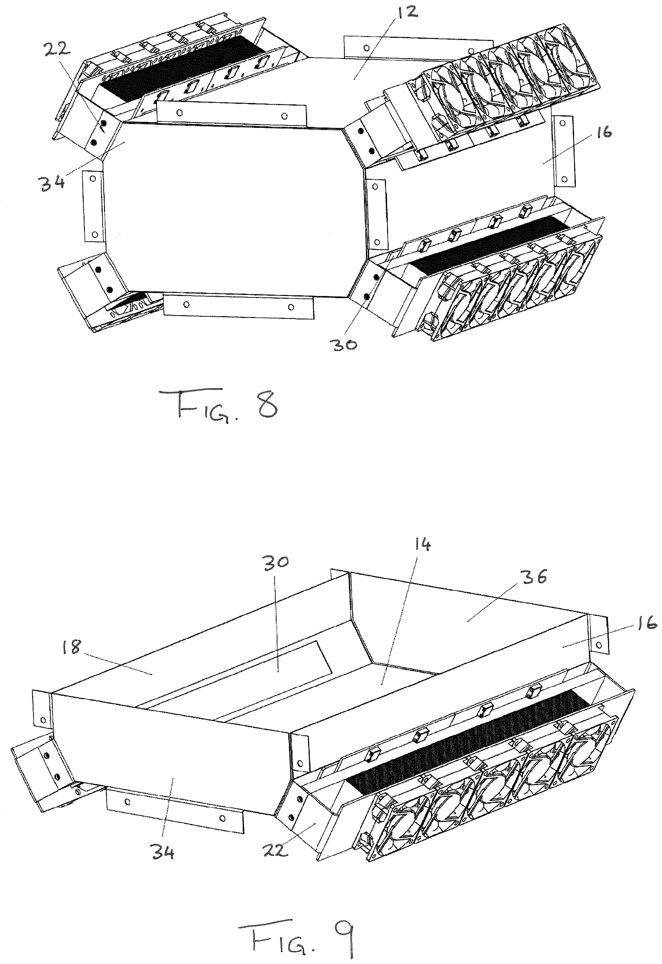

Figs. 8 and 9 show the curing chamber 10 completed by the addition of a front wall 34 and a rear wall 36. The front and rear walls 34, 36, are similarly made of or coated with a reflective material, further improving the uniformity of radiation distribution within the chamber by reflecting light back into the chamber.

In practice, at least one of the front wall 34, rear wall 36, sidewalls 12, 14, 16, 18 or corner walls 32 will provide an opening into the chamber interior volume to allow insertion or removal of a workpiece to be cured. Most commonly, the front wall 34 forms part of or is carried on a door (not shown in Figs. 8 or 9) which may be opened and closed to access and seal the chamber interior volume.

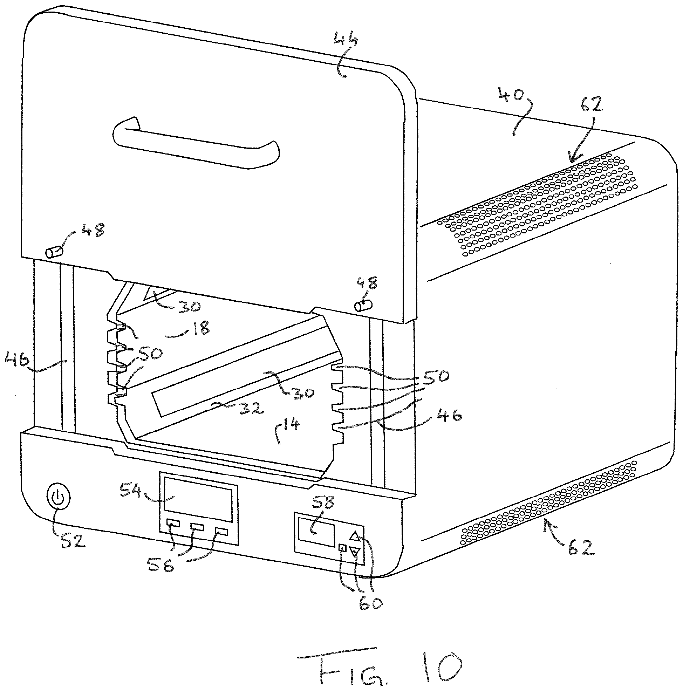

Fig. 10 shows the chamber of Fig.1 incorporated into an apparatus for curing a workpiece. A housing 42 is provided with a front door 44 which is slidably mounted on runners or rails 46. The door 44 can be raised as shown in Fig.10 or lowered to seal the chamber interior volume. A pair of latch control knobs 48 must be actuated to release the door from its closed position. A micro switch (not shown) is provided to detect when the door is opened and to deactivate the LEDs in order to protect against stray radiation.

The housing 42 includes a number of shelf support positions 50 (with matching shelf support positions provided at the rear of the chamber, not shown), allowing a shelf to be inserted at a desired height within the chamber. The shelf (not shown) is preferably made of a material which is transparent to the radiation. Incorporation of the shelf supports at the rear of the chamber can be done by inserting a suitable shelf support structure into the chamber or by intervening the shelf supports between the rear wall and the rear edges of the sidewalls and corner walls (i.e. with a gap unlike in Fig. 8 where the rear wall is flush against and in contact with the sidewalls and corner walls. Similarly, it can be seen that the front wall, which will be mounted to the interior of the sliding door, is spaced apart from the chamber structure of sidewalls and corner walls, to accommodate the shelf supports, thereby being a modification relative to the Fig. 8 design.

User controls and displays are provided on the front of the apparatus. These include an on-off switch 52, a timer countdown display 54, timer countdown programming buttons 56, temperature display 58, and temperature adjustment buttons 60. It can also be seen that ventilation holes 62 are provided in the housing positions matching the internal fan positions, to promote improved airflow and better cooling.

In operation, the unit is powered on with the on-off switch 52. The three programming buttons 56 are used to program the countdown timer as follows:
1) The timer display initially shows 0:00:00 (hours, minutes, seconds). The leftmost button ("PROG") is pressed once to activate the adjustment, causing the hours digit to flash. The middle button decrements the value and the rightmost button increments the value.
2) Pressing PROG again retains the entered hours value and causes the minute digits to flash. These are again adjusted with the middle and right buttons.
3) The same operation is repeated using the PROG button to activate the seconds adjustment.
4) Pressing PROG again exits the adjustment and sets the program.
5) Once the program is set the rightmost button has a second function, namely start/stop. Pressing this will start or stop the program. The middle button has a second function, namely reset, allowing the program to be reset.

The skilled person will readily appreciate that the user interface described herein is not intended to be limiting in any way. A curing chamber according to the invention may have any desired interface and any desired controller functionality to operate the radiation-emitting devices in a manner that achieves the required curing of a workpiece. For example, the interface could be provided as a touchscreen control panel offering the user access to numerous parameters including curing time, intensity controls, wavelength selection, granular control of different radiation-emitting devices (e.g. in different corners) or of different parts of the same device (e.g. individual LEDs or sub-arrays of LEDs), and so on.

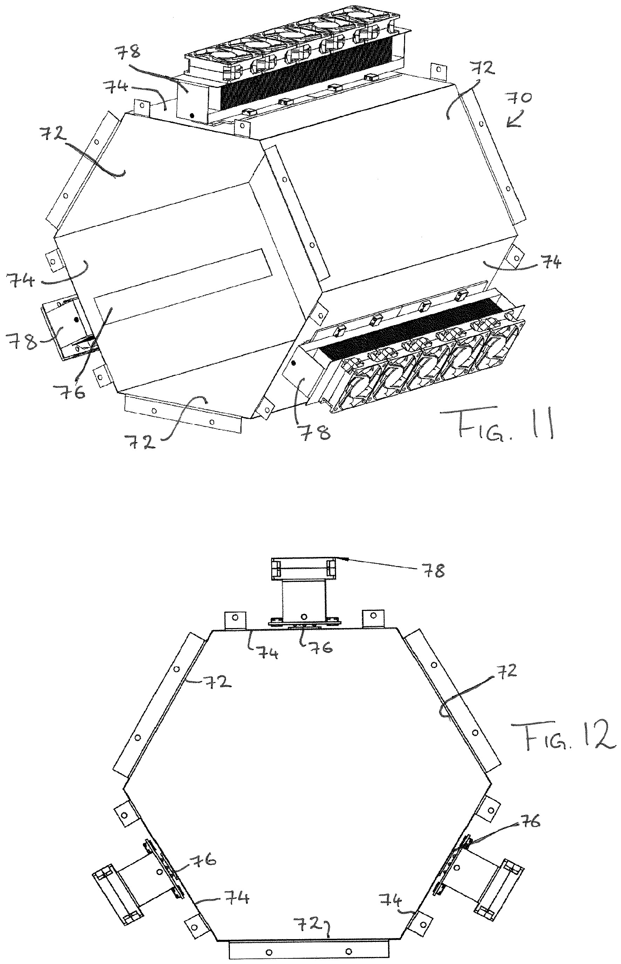

Figs. 11 to 14 show an alternative embodiment of curing chamber in a perspective view, front elevation view, side elevation view and plan view from below, respectively. In this embodiment there are three sidewalls 72, with the region between each pair of adjacent sidewalls being bridged by a respective corner wall 74. In each corner wall 74 there is a glass window 66 and behind each glass window, as in the first embodiment, the respective light engine 78 is mounted to illuminate the interior of the chamber volume.

Thus, the chamber volume in cross section is of a hexagonal shape, with the sides of the hexagon being alternately provided by sidewalls 72 and corner walls 74. Although the hexagon his regular in shape, it can also be provided as an irregular hexagon with e.g. larger sidewalls and smaller corner walls, or vice versa.

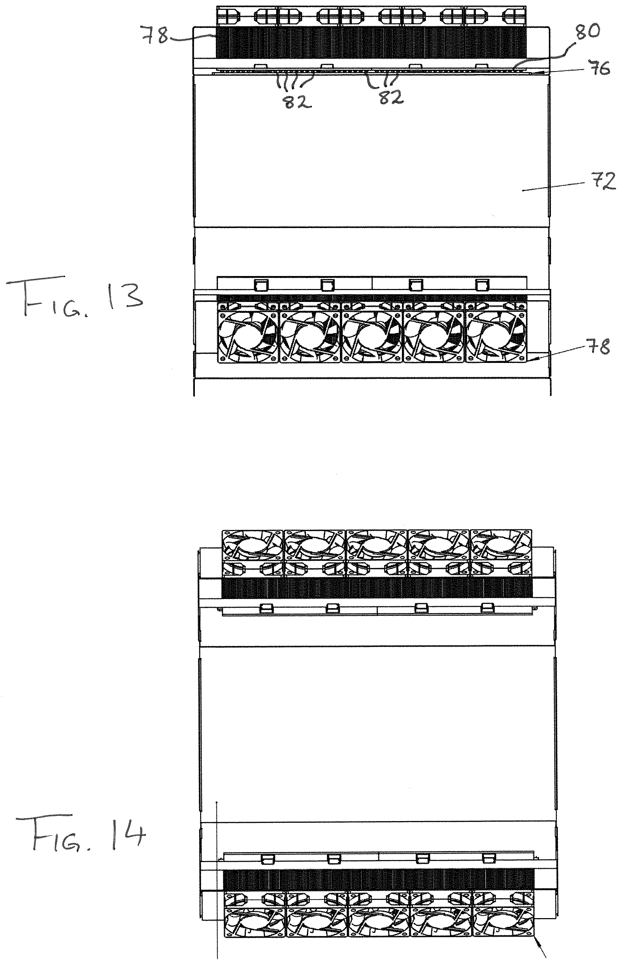

Referring to Fig. 13, the light engine 78 on the top of the chamber can be seen side-on. This light engine, which is identical to those of the Fig. 1 embodiment, can be seen to have a printed circuit board 80 with an array of LEDs 82 mounted on a facing side of the board 80 so that they are sandwiched between the circuit board and the glass window 76.

### Test results - Fig. 1 and Fig. 10 apparatus

The chamber of Fig. 1, incorporated in the apparatus of Fig. 10, was tested to characterise its performance characteristics.

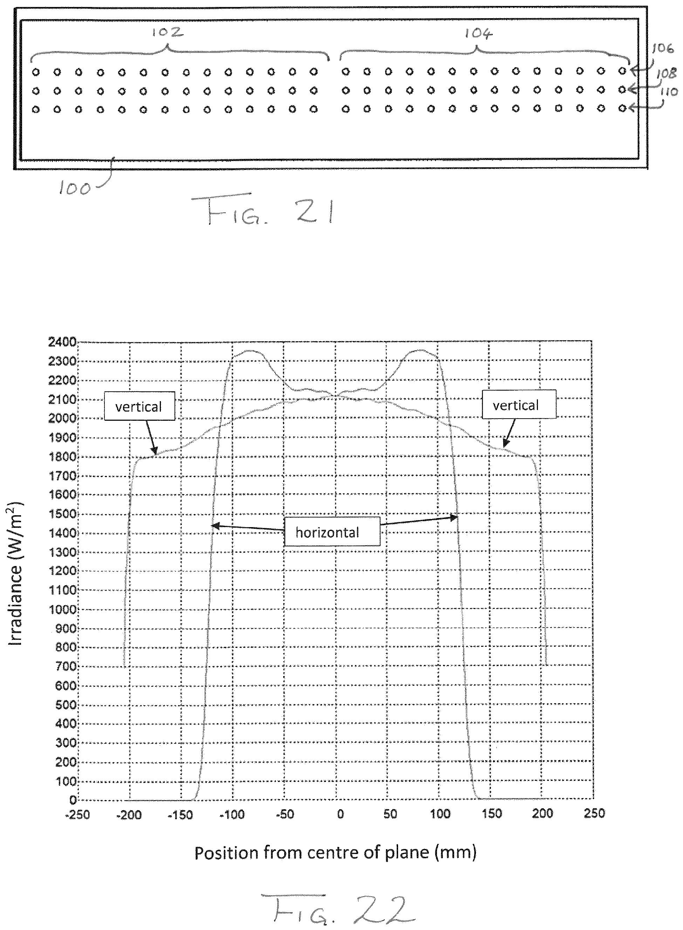

The LEDs used were of three wavelengths (365nm, 385nm and 405nm), and were arranged as shown in Fig. 21, where it can be seen that there is a board 100 with an array of LEDs formed of two sub-arrays 102, 104 placed end to end. Each sub-array has three rows of fourteen LEDs, with each row of fourteen LEDs being of one of the three wavelengths. The top-most pair 106 of end-to-end rows comprise 28 x 365nm LEDS, the middle pair 108 comprise 28 x 385nm LEDS, and the bottom pair 110 of rows comprise 28 x 405nm LEDS. Thus, each wavelength is distributed along the length of the array, increasing the uniformity of illumination, as discussed further below.

### 1. Intensity Distribution

A quartz tray was placed on the middle rack height position. Intensity measurements were taken at 9 different locations across the area of the tray, using the BTS256-1 radiometer which can measure the total and relative intensity output of multiwavelength sources.

Two sets of readings were taken, one at medium output (set to produce approximately 300 mW/cm²) and maximum output (set to produce approximately 600 mW/cm²). Intensity measurements were taken facing two directions, up and down, whereby in the latter position the radiometer lay on top of and faced the quartz tray.

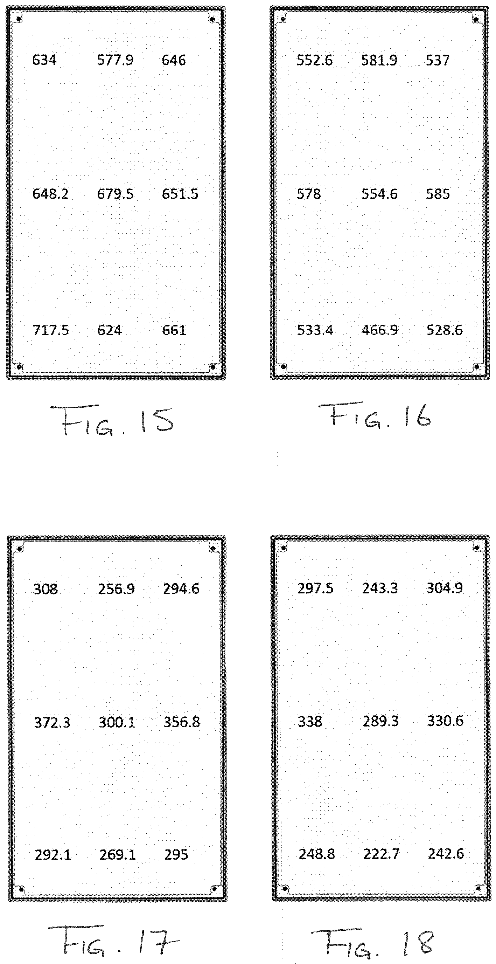

Fig. 15 is a spatial mapping of the intensity values measured at different points on the tray when the system is operated at maximum output. This distribution was similar to the distribution observed in a simulation of the chamber (discussed further below in a separate section describing the simulation results). Furthermore, as per the simulation, the intensity distribution was expected to vary no more than 25% across the XZ plane. This was observed in the fact that the difference between the highest recorded value of 717.5 mW/cm² on the left side of the quartz plate and the top middle value of 577.9 mW/cm², corresponds to a variation of 19%. A similar range of variation was observed in the downward facing measurements mapped in Fig. 16.

Fig. 17 illustrates the intensity variation across the quartz plates when the system is operated at medium output aiming for a nominal 300 mW/cm². It can be observed based on the figure that the intensity variation follows a similar distribution to the maximum output setting, with a variation of 31% across the measured values. As light intensity decays significantly over working distance, the positioning of the radiometer relative to the light source can cause significant discrepancies in intensity measurements between relative positions. Therefore, the increase in variation between minimum and maximum intensity might be attributable to human error when taking the measurements.

### 2. Heating Capability

Chamber temperature was measured using two thermocouples at the same time and using both medium and maximum chamber power settings. 'Thermocouple 1' was positioned at the back of the chamber where the intensity of light would be the lowest as per the simulation. 'Thermocouple 2' was placed inside an aluminium block, which in theory encapsulated the thermocouple so that no UV light directly acted onto the probe.

Table 1 illustrates the temperature evolution of the thermocouples using both medium and maximum power settings. Results indicate that the chamber is capable of reaching temperatures above 110°C in just 10 minutes of operation time. Based on the recorded values, it appears that the aluminium block behaved like a 'black body', absorbing all of the direct UV energy and then became a source of heat itself. This is interesting to note as the maximum temperature recorded of 132°C was obtained with "Thermocouple 2", enclosed by the aluminium block.

Given this phenomenon, defining the inner chamber temperature is quite ambiguous. Direct radiation results in significant heat generation which does not mean that the inner chamber temperature is as per the thermocouple reading. Similarly, readings from the thermocouple which does not receive direct light is also influenced by the radiation of the aluminium block after has itself become a source of heat.

**Table 1**

| | **Medium Power (300mW/cm²)** | | | **Maximum Power (600mW/cm²)** | |
|---|---|---|---|---|---|
| **Time (s)** | **Thermocouple 1** | **Thermocouple 2** | **Time (s)** | **Thermocouple 1** | **Thermocouple 2** |
| **0** | 24 | 24 | **0** | 24 | 24 |
| **30** | 49 | 30 | **30** | 84 | 31 |
| **60** | 51 | 37 | **60** | 87 | 38 |
| **90** | 52 | 38 | **90** | 91 | 45 |
| **120** | 54 | 42 | **120** | 89 | 55 |
| **150** | 56 | 46 | **150** | 93 | 58 |
| **180** | 56 | 48 | **180** | 96 | 64 |
| **210** | 58 | 52 | **210** | 96 | 69 |
| **240** | 58 | 55 | **240** | 98 | 75 |
| **270** | 59 | 58 | **270** | 99 | 80 |
| **300** | 62 | 60 | **300** | 100 | 86 |
| **360** | 65 | 66 | **330** | 99 | 91 |
| **420** | 66 | 72 | **360** | 102 | 96 |
| **480** | 67 | 77 | **390** | 104 | 101 |
| **540** | 71 | 82 | **420** | 104 | 106 |
| **600** | 70 | 87 | **450** | 105 | 110 |
| **660** | 71 | 92 | **480** | 106 | 115 |
| **720** | 74 | 97 | **510** | 108 | 120 |
| **780** | 74 | 101 | **540** | 107 | 123 |
| **840** | 76 | 105 | **570** | 110 | 128 |
| **900** | 77 | 109 | **600** | 110 | 132 |

### 3. Uniformity

Uniformity was evaluated based on a 3D Fujifilm test. For this test, a full A4 Fujifilm sheet of "UVSCALE L" ultraviolet light distribution measurement film was placed on the quartz tray facing in different orientations (XY (middle shelf), XY (bottom most shelf), YZ (centre) and YZ (50mm towards right side). The Fujifilm sheets were exposed for 5s to record the uniformity of the chamber at the specified locations.

Results of the recorded uniformity measurements were similar to those obtained during development through simulation studies. More specifically, the intensity distribution observed for the XY middle shelf sheet exhibited a variation of approximately 20%, coinciding directly with that of the simulation, where the highest dosage occurs closest to the light source, and the lowest dosage along the centre line. The XY bottom shelf film appeared to show a significant improvement in uniformity; however, this is not exactly the case as the Fujifilm test does not account for the bottom light sources, which would ultimately result in a similar result to that observed at the middle shelf position.

Similarly, across the YZ-axis the results were extremely uniform, again within the 20% variation range. It is interesting to note that very little difference was between the YZ sheets in the different positions. This result is very meaningful as it illustrates the systems capability of achieving high uniformity throughout the curing volume.

### 4. Thermal Performance

Thermal properties of the system were evaluated based on thermistor readings of the PCBA boards and a thermocouple attached to the power supply unit (PSU). Two sets of readings were taken while the curing chamber operated for durations of 15 and 10 minutes, at medium and maximum output, respectively.

Results (shown in Table 2) indicated that during operation using 300mW/cm² intensity output setting, the PSU temperature increases to 49°C and the board temperature increases to 54°C after operating continuously for 15 minutes. Comparatively, when the system is operated at 600mW/cm², the PSU temperature increases to 68°C and the board temperature increases to 78°C after operating continuously for 10 minutes.

**Table 2**

| | Temperature (°C) | | | | |
|---|---|---|---|---|---|
| | Medium Power (300mW/cm2) | | | Maximum Power (600mW/cm2) | |
| Time (s) | PSU | Board Temperature | Time (s) | PSU | Board Temperature |
| 0 | 24 | 24 | 0 | 31 | 31 |
| 30 | 24 | 32 | 30 | 34 | 46 |
| 60 | 27 | 34 | 60 | 35 | 50 |
| 90 | 30 | 35 | 90 | 42 | 54 |
| 120 | 32 | 36 | 120 | 47 | 57 |
| 150 | 33 | 38 | 150 | 45 | 60 |
| 180 | 32 | 38 | 180 | 51 | 61 |
| 210 | 35 | 39 | 210 | 54 | 63 |
| 240 | 36 | 40 | 240 | 53 | 64 |
| 270 | 37 | 41 | 270 | 58 | 66 |
| 300 | 38 | 43 | 300 | 56 | 68 |
| 360 | 42 | 45 | 330 | 61 | 69 |
| 420 | 43 | 47 | 360 | 61 | 71 |
| 480 | 43 | 48 | 390 | 60 | 72 |
| 540 | 45 | 49 | 420 | 65 | 73 |
| 600 | 47 | 50 | 450 | 65 | 74 |
| 660 | 46 | 51 | 480 | 63 | 75 |
| 720 | 46 | 52 | 510 | 64 | 76 |
| 780 | 47 | 53 | 540 | 68 | 77 |
| 840 | 48 | 53 | 570 | 67 | 77 |
| 900 | 49 | 54 | 600 | 68 | 78 |

These results were obtained operating the system 5x longer than the application-level curing cycle. If the system was to be operated based on the recommended period for specific resins of 5 minutes and 2.5 minutes using 300 and 600 mW/cm², the maximum temperatures recorded would be 47°C and 50°C, and 45°C and 60°C, respectively, for the PSU and board temperatures under the two conditions.

The results indicate that the system build can support thousands of hours of intervaled use as per the application use case.

### 5. Mechanical Test - Curing Performance of 3D Printed Parts

Application tests were carried out to evaluate the performance of the curing chamber for the application it was primarily designed for, i.e. curing of 3D printed parts, and to determine if the performance was superior to the existing solution in the current marketplace.

Tensile specimens were printed according to ASTM D638-10 Type IV (this being a standard specimen in a dumbbell shape used for comparative testing of tensile strengths). Samples were printed using a Form 3 and Origin One 3D printers. Utilizing the Form 3, 'High Temperature resin' samples were printed, and 'ST45', 'IND403 BK' and 'Dura56' were printed using the Origin One systems.

Table 3 details the test matrix used for a comparison study between the Dymax ECE2000 flood lamp curing system, the Formlabs Form Cure machine, and the curing chamber apparatus of Fig. 10 (referred to in Table 3 as the "3D Chamber".

For evaluation of the 3D curing chamber, 9 samples were evenly distribution across the quartz tray within the chamber. This set-up allowed the uniformity to be tested through the mechanical properties of the samples are the curing process.

**Table 3**

| **Condition** | **Sample size (no.)** | | | | |
|---|---|---|---|---|---|
| Green Part (no cure) | 10 | 10 | 10 | 10 | 10 |
| FormCure (10 mW/cm²) | 10 | 10 | 10 | 10 | 10 |
| ECE2000 (130 mW/cm²) | 10 | 10 | 10 | 10 | 10 |
| 3D Chamber (300 mW/cm²) | 45 | 45 | 45 | 45 | 45 |
| 3D Chamber (600 mW/cm²) | 45 | 45 | 45 | 45 | 45 |

Tables 4 and 5 illustrate the mechanical properties recorded for the different test conditions for the 'High Temperature' and 'ST45' resins. Based on the results it is clearly evident that the 3D Chamber's

**Table 4**

| **Datasheet Properties** | | **Modulus(GPa)** | **Ultimate Stress(MPa)** | **Strain at Break (%)** |
|---|---|---|---|---|
| Green Part (not cured) | | 0.75 | 20.9 | 14 |
| Post-cured | | 2.75 | 58.3 | 3.3 |

| **Curing Condition** | **Cure time (minutes)** | **Modulus(GPa)** | **Ultimate Stress(MPa)** | **Strain at Break (%)** |
|---|---|---|---|---|
| Green Part (not cured) | 0 | 0.51 ± 02 | 20.9 ± 2.4 | 28.9 ± 0.5 |
| FormCure (12mW) | 120 | 2.14 ± 0.6 | 65.6 ± 6.3 | 9.73 ± 1.8 |
| ECE2000 half cycle (130mW) | 4.6 | 2.05 ± 0.4 | 52.9 ± 9.6 | 7.1 ± 2.7 |
| ECE2000 full cycle (130mW) | 9.2 | 2.56 ± 0.3 | 65 ± 9.5 | 9.1 ± 2 |
| 3D Chamber (300mW) | 4 | 2.72 ± 0.11 | 65.3 ± 2.9 | 7.8 ± 1.6 |
| 3D Chamber (600mW) | 2 | 2.08 ± 0.4 | 63.2 ± 2.6 | 9.6 ± 2.6 |

**Table 5**

| **Datasheet Properties** | | **Modulus(GPa)** | **Ultimate Stress(MPa)** | **Strain at Break (%)** |
|---|---|---|---|---|
| Green Part (not cured) | | | | |
| Post-cured | | 2 | 53 | 21 |

| **Curing Condition** | **Cure time (minutes)** | **Modulus(GPa)** | **Ultimate Stress(MPa)** | **Strain at Break (%)** |
|---|---|---|---|---|
| Green Part (not cured) | 0 | 1.1 ± 0.07 | 38.83 ± 3.9 | > 25 |
| FormCure (12mW) | 250 | 1.6 ± 0.06 | 59.8 ± 1.6 | > 25 |
| ECE2000 full cycle (130mW) | 12 | 1.7 ± 0.1 | 62.5 ± 1.1 | > 25 |
| 3D Chamber (300mW) | 5 | 1.8 ± 0.08 | 66.69 ± 2.4 | > 25 |
| 3D Chamber (600mW) | 2.5 | 1.8 ± 0.08 | 67.6 ± 1.7 | > 25 |

It is important to note that the lower value modulus recorded for the 600mW/cm² condition of the 'High Temperature' resin in comparison to that observed by the 300mW/cm² resin could be attributed to the inconsistency within the material itself, but also the reaction of the secondary heating mechanism within the chemistry to achieve the high temperature properties the resin is advertised to possesses. This mean that for that resin, a lower temperature due to the direct UV radiation results in a superior cure than a high intensity exposure which results in an increase of 50°C in part temperature.

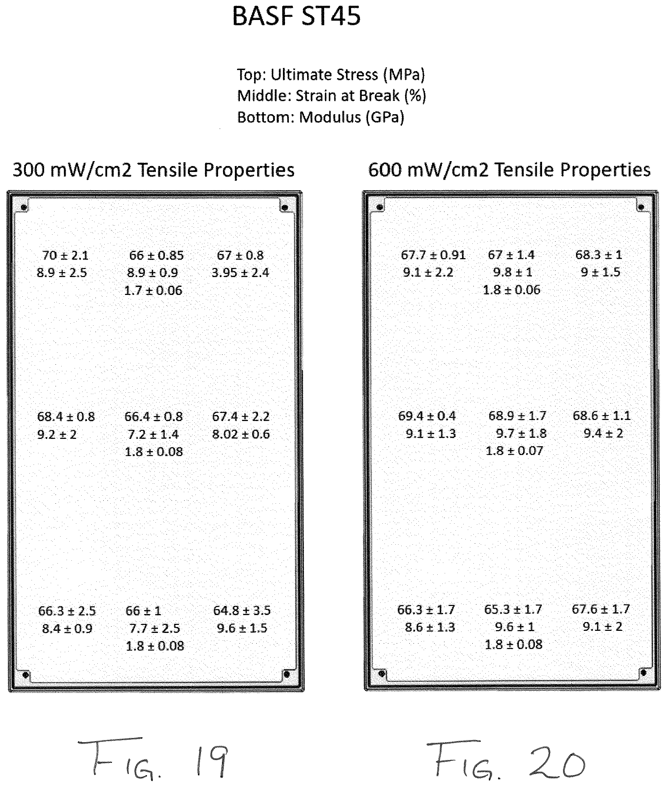

Figs. 19 and 20 depict the tensile properties distribution across the quartz glass plate, illustrating the consistency of recorded properties across the curing volume, for parts cured using the nominal 300 mW/cm² intensity and 300 mW/cm² intensity, respectively. It can clearly be seen that the chamber design achieves the requirement of uniform curing across the entire build volume as per the design requirement.

### Simulation results

The chamber design of Fig. 8 was simulated, where each of the four corner-area LED arrays was an array as shown in Fig. 2. The LEDs were simulated at an operating temperature of 25 degrees C and an operating current of 0.5A per LED, and the flux from each of the three rows of LEDs was provided as:
365nm (row 1): 0.925 W
385nm (row 2): 1.075 W
405nm (row 3): 1.025 W

The irradiance at each wavelength was calculated across four different planes:
**Plane 1:** a horizontal planar area measuring 247mm x 411mm located at the level of the middle shelf position, halfway up the height of the chamber.
**Plane 2:** a horizontal planar area measuring 247mm x 411mm located at the level of the lowest shelf position, located at the bottom edge of the right and left sidewalls, where they meet the bottom corner walls.
**Plane 3:** a vertical planar area measuring 247mm x 80mm located parallel to and midway between the front and rear walls, i.e. dividing the chamber interior into front and rear halves.
**Plane 4:** a vertical planar area measuring 411mm x 145mm located parallel to and midway between the left and right sidewalls, i.e. dividing the chamber interior into left and right halves.

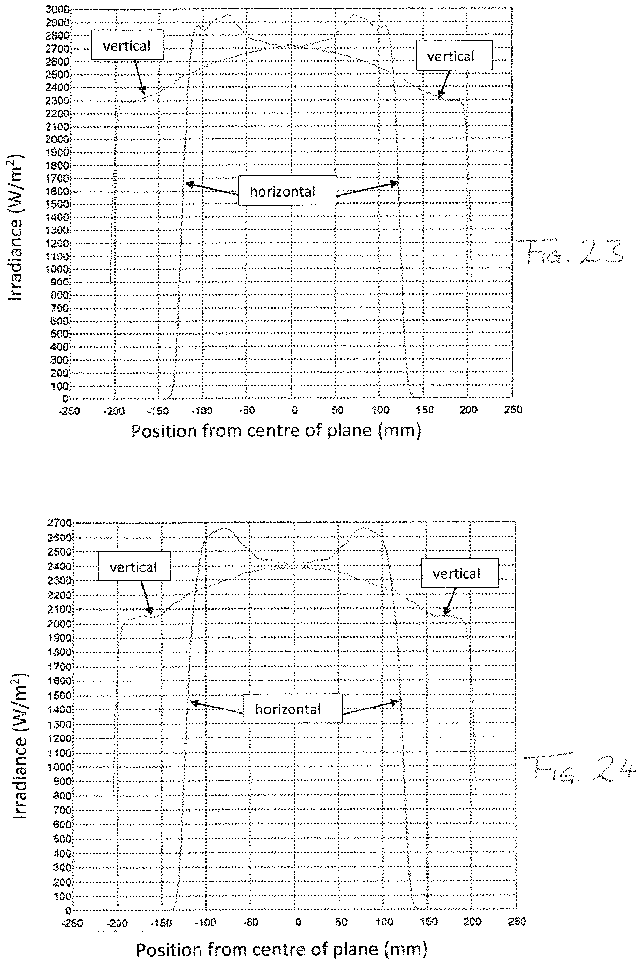

Fig. 22 shows the simulated irradiance for plane 1 at 365nm. Two lines are plotted on this, giving the irradiance at the plane along the X- and Y- axes, in other words left-right and rearward-forward within the chamber. Figs. 23 and 24 show the irradiance plotted similarly for the 385nm and 405nm wavelengths.

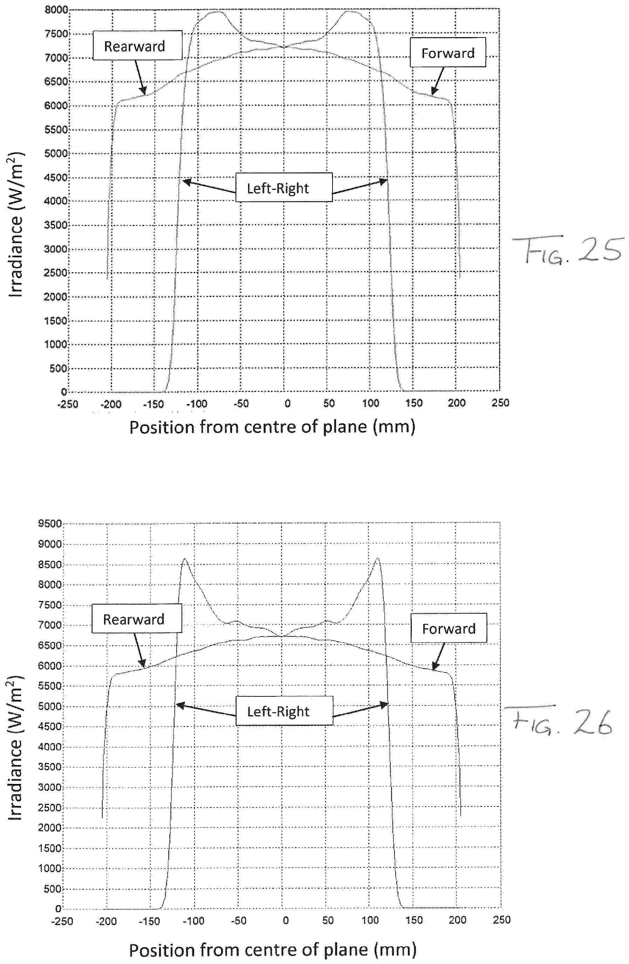

Fig. 25 shows the combined irradiance across all wavelengths. It can be seen that this is uniform to a very high standard across this plane, and moreover it matches well with the measured uniformity already described in the testing results, giving good confidence that the remaining simulation results will be accurate.

For the remaining planes, only the combined irradiance is shown.

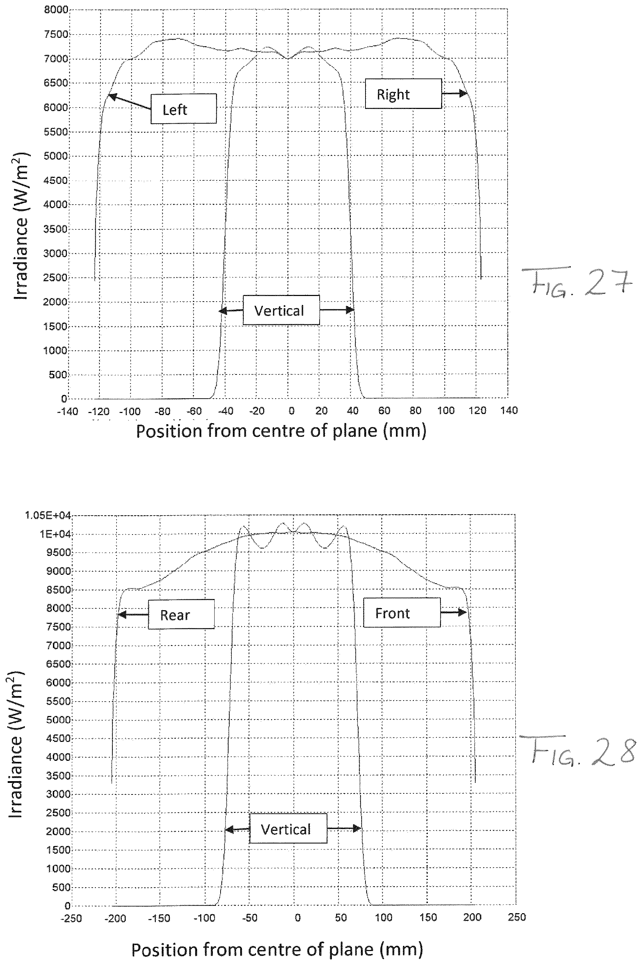

Fig. 26 shows the combined irradiance at plane 2, Fig. 27 shows the combined irradiance at plane 3, and Fig. 28 shows the combined irradiance at plane 4.

It can be seen that a highly uniform curing irradiance is provided across all wavelengths and all chamber positions where a workpiece will be located in use.

The invention is not limited to the specific embodiments disclosed herein, which may be varied without departing from the scope of the appended claims.

## Claims

1. A curing chamber for curing a workpiece by exposure to electromagnetic radiation, comprising:
at least three sidewalls surrounding and at least partially defining an interior volume adapted to contain a workpiece, each of the sidewalls being reflective to electromagnetic radiation of a predetermined wavelength within said interior volume,
wherein each sidewall has a pair of opposed edges each of which is located adjacent one of the opposed edges of an adjacent one of the sidewalls, with the region between adjacent edges of adjacent sidewalls defining a respective elongated corner region; and
at least one radiation-emitting device, the radiation-emitting device being of an elongate shape and being disposed along one of said corner regions such as to emit electromagnetic radiation of said predetermined wavelength from a plurality of points along the length of the device into said interior volume when activated.

2. A curing chamber according to claim 1, comprising a plurality of said radiation-emitting devices, each of which is disposed along a different respective corner region.

3. A curing chamber according to any preceding claim, wherein a corner region between adjacent ones of said three or more sidewalls is occupied by a corner wall, disposed at a facing angle intermediate the angle faced by the adjacent pair of sidewalls, wherein the radiation-emitting device is provided within said corner wall.

4. A curing chamber according to claim 4, wherein the corner wall is a reflective panel having said radiation-emitting device disposed within the surface thereof.

5. A curing chamber according to any preceding claim, wherein each sidewall is generally rectangular in area and has a width defined between the opposed edges and a depth defined parallel to the opposed edges, and wherein the or each radiation-emitting device extends along more than 50% of the depth of an adjacent sidewall.

6. A curing chamber according to any preceding claim, wherein three sidewalls are provided, and wherein a respective radiation-emitting device is disposed along each of the three corner areas between adjacent pairs of the three sidewalls.

7. A curing chamber according to any of claims 1-5, wherein four sidewalls are provided, wherein a respective radiation-emitting device is disposed along each of the four corner areas between adjacent pairs of the four sidewalls.

8. A curing chamber according to claim 7, wherein the sidewalls and radiation-emitting devices together define an eight-sided cross-sectional boundary surrounding said interior volume, the shape of the cross-section being an irregular or regular octagon having alternating sides defined by the sidewalls and radiation-emitting devices, respectively.

9. A curing chamber according to any preceding claim, wherein the radiation-emitting device comprises a window that is transparent to said electromagnetic radiation of a predetermined wavelength, the window forming at least part of a boundary surface of the chamber interior volume, and one or more radiation emitters disposed to illuminate the interior volume through the window.

10. A curing chamber according to claim 30, wherein said one or more radiation emitters are provided in a panel of emitters disposed outwardly of the window and facing towards the window.

11. A curing chamber according to claim 31, wherein the panel of emitters comprises a front surface on which the emitters are mounted and facing towards the window and a rear surface facing away from the window, further comprising a cooling mechanism disposed outwardly of the panel of emitters and adapted to cool the panel of emitters from the rear surface thereof.

12. A curing chamber according to any preceding claim, further comprising a rear wall adjacent each of the sidewalls at a rear sidewall edge, the rear wall further defining and bounding said interior volume, wherein the rear wall is reflective to said wavelength of electromagnetic radiation.

13. A curing chamber according to any preceding claim, wherein an opening is provided in a wall enclosing the interior volume to permit the insertion and removal of a workpiece into the interior volume.

14. A curing chamber according to any preceding claim, wherein the chamber comprises a front wall adjacent each of the sidewalls at a front sidewall edge, said front wall further defining and bounding said interior volume, and said opening being provided at said front wall.

15. An apparatus for curing a workpiece by exposure to electromagnetic radiation, comprising:
a curing chamber according to any preceding claim;
a controller configured to control the activation and operation of the or each radiation-emitting device in accordance with a user input; and
a power source providing power to the or each radiation-emitting device under the control of the controller.
